# EUROPÄISCHE PATENTSCHRIFT

(11) **EP 2 825 467 B1**
(45) Veröffentlichungstag und Bekanntmachung des Hinweises auf die Patenterteilung: **27.09.2017**
(21) Anmeldenummer: 13708709.4
(22) Anmeldetag: 18.02.2013
(51) Int. Cl.: B29C 65/02, B29C 65/48, B29C 65/74, B65B 9/067, B65B 51/30, B65B 65/02, B29C 65/08, B29C 65/18, B65B 51/22

(54) **HORIZONTALQUERSIEGELEINHEIT**
HORIZONTAL TRANSVERSE SEALING UNIT
UNITÉ HORIZONTALE DE SCELLEMENT TRANSVERSAL

(30) Priorität: 16.03.2012 DE 102012204196
(43) Veröffentlichungstag der Anmeldung: 21.01.2015
(73) Patentinhaber: Robert Bosch GmbH, 70442 Stuttgart (DE)
(72) Erfinder: WIPF, Alfred, 79798 Jestetten (DE); STEINEMANN, Rolf, CH-8212 Neuhausen (CH); BECHTEL, Tobias, CH-8222 Beringen (CH); BLANZ, Peter, CH-8212 Neuhausen (CH); SCHNEIDER, Hauke, 79807 Lottstetten (DE)
(86) Internationale Anmeldenummer: PCT/EP2013/053207
(87) Internationale Veröffentlichungsnummer: WO 2013/135459

(56) Entgegenhaltungen:
- DE-A1- 10 341 450
- DE-U1- 29 822 122
- GB-A- 2 262 079

## Beschreibung

### Stand der Technik

Es sind bereits Horizontalquersiegeleinheiten für horizontale Schlauchbeutelmaschinen zum Verschließen zumindest eines Folienschlauchs um zumindest einen zu verpackenden Gegenstand mit einer ersten und einer zweiten, zueinander parallelen Rotationsachse und zumindest zwei Siegelbackenpaaren, die jeweils von zumindest einer um die erste Rotationsachse rotierenden Siegelbacke und zumindest einer um die zweite Rotationsachse rotierenden Siegelbacke gebildet werden, so dass sich bei einem Siegelvorgang die Siegelbacken eines Siegelbackenpaars annähern und zwischen den Siegelbacken Materiallagen unter Ausübung von Druck versiegelbar sind, bekannt (siehe z. B. die Druckschrift GB 262079 A). Ein Siegelantrieb treibt die Siegelbacken synchron an. Während Siegelvorgängen werden die Siegelbacken mit einer mit dem Folienschlauch synchronisierten Verpackungsgeschwindigkeit bewegt. In Zeiträumen zwischen den Siegelvorgängen können die Siegelbacken in einer Hinkbewegung beschleunigt und/oder abgebremst werden. Es kann eine Abweichung von Längen zu bildender Packungen von einer Bahnlänge, entlang der die Siegelbacken bewegt werden, ausgeglichen werden. Die Hinkbewegung kann bei einem gemeinsamen Siegelantrieb, der alle Siegelbacken synchron antreibt, nur während der Zeitdauer erfolgen, in der keine Siegelbacke einen Siegelvorgang ausübt. Die damit kurze Zeitdauer, die für die Hinkbewegung zur Verfügung steht, bewirkt hohe Beschleunigungen und/oder eine reduzierte Leistungsfähigkeit der Horizontalquersiegeleinheit. Abweichungen der Packungslängen von einer der Bahnlänge der Siegelbacken angepassten Packungslänge sind nur begrenzt möglich.

Die Druckschrift DE 29822122 U1 offenbart eine Vertikalquersiegeleinheit für eine vertikale Schlauchbeteulmaschine zum Verschließen eines Folienschlauchs, wobei die Antriebe der Antriebswellen von zwei um eine gemeinsame Rotationsachse rotierenden Siegelbacken unabhängig voneinander steuerbar sind.

### Offenbarung der Erfindung

Die Erfindung geht aus von einer Horizontalquersiegeleinheit, insbesondere für eine horizontale Schlauchbeutelmaschine, zum Verschließen zumindest eines Folienschlauchs um zumindest einen zu verpackenden Gegenstand, mit einer ersten und einer zweiten, zueinander parallelen Rotationsachse und zumindest zwei Siegelbackenpaaren, die jeweils von zumindest einer um die erste Rotationsachse rotierenden Siegelbacke und zumindest einer um die zweite Rotationsachse rotierenden Siegelbacke gebildet werden, so dass sich bei einem Siegelvorgang die Siegelbacken eines Siegelbackenpaars annähern und zwischen den Siegelbacken Materiallagen unter Ausübung von Druck versiegelbar sind.

Es wird erfindungsgemäß vorgeschlagen, dass zumindest zwei unabhängig antreibbare Siegelantriebe der Horizontalquersiegeleinheit dazu vorgesehen sind, zumindest zwei Siegelbackenpaare voneinander unabhängig anzutreiben. Unter einer "horizontalen Schlauchbeutelmaschine" soll in diesem Zusammenhang insbesondere eine, dem Fachmann als HFFS "Horizontal Form Fill Seal"-Verpackungsmaschine bekannte Verpackungsmaschine verstanden werden, die dazu vorgesehen ist, aus einer Materialbahn zumindest einen Folienschlauch um einen oder mehrere zu verpackende Gegenstände zu formen und diesen an beiden Enden zu verschließen. Zu verpackende Gegenstände und der um die Gegenstände geformte Folienschlauch werden während des Formens des Schlauchs, dem Einbringen der zu verpackenden Gegenstände in den Folienschlauch und dem Verschließen des Schlauchs zumindest im Wesentlichen in einer horizontalen Verpackungsrichtung bewegt. Unter "zumindest im Wesentlichen horizontal" soll in diesem Zusammenhang insbesondere eine Richtung verstanden werden, die weniger als 60°, bevorzugt weniger als 45°, besonders bevorzugt um weniger als 20° von einer senkrecht zu einer Gewichtskraft angeordneten Horizontalen abweicht. Bevorzugt liegen zu verpackende Gegenstände während einer Zufuhrbewegung auf einem Zufuhrträger auf. Die Materialbahn wird bevorzugt um die zu verpackenden Gegenstände zu einem Folienschlauch geformt. Der Folienschlauch wird bevorzugt durch eine Längssiegeleinheit verschlossen, die in Verpackungsrichtung vor der Horizontalquersiegeleinheit angeordnet ist. Zum Schließen des Schlauchs verbindet die Längssiegeleinheit die beiden parallel zur Verpackungsrichtung der Materialbahn angeordneten Außenkanten der Materialbahn bevorzugt überlappend ("Lapseal"), wobei eine Außenseite einer Materialbahnkante mit einer Innenseite der weiteren Materialbahnkante verbunden wird. Besonders bevorzugt verbindet die Längssiegeleinheit die Außenkanten der Materialbahn mit einer Flossennaht ("Finseal"), wobei die Innenseiten der Materialbahnkanten aufeinandergelegt und verbunden werden. Bevorzugt verbindet die Längssiegeleinheit zwei Materiallagen der Materialbahn. Unter einer "Materiallage" soll in diesem Zusammenhang insbesondere eine Lage der Materialbahn verstanden werden, wobei eine Materiallage mehrere Schichten aufweisen kann, wie eine Trägerschicht und eine Siegelschicht. Die Längssiegeleinheit enthält bevorzugt eine oder mehrere Siegeleinrichtungen, zum Beispiel Siegelrollenpaare und/oder Siegelpacken, die Außenkanten unter Ausübung von Druck und/oder Wärme auf die Materialbahnlagen verbinden. Zu verpackende Gegenstände werden bevorzugt durch geeignete Mittel, wie eine Zufuhrkette mit Mitnehmern, welche die Gegenstände in Verpackungsrichtung schieben, in den Folienschlauch eingeschoben. Unter einer "Horizontalquersiegeleinheit" soll in diesem Zusammenhang insbesondere eine Einheit verstanden werden, die dazu vorgesehen ist, den Folienschlauch in Verpackungsrichtung vor und hinter zu verpackenden Gegenständen zu verschließen. Es ist auch möglich, dass aus einer oder mehreren Materialbahnen mehrere Folienschläuche in Verpackungsrichtung nebeneinander gebildet werden. Dies ist insbesondere bei mehrbahnigen Verpackungsmaschinen der Fall, bei denen auf mehreren in Verpackungsrichtung nebeneinander angeordnete Bahnen zu verpackender Gegenstände zugeführt werden. Die horizontale Schlauchbeutelmaschine kann in diesem Fall für jede Bahn einen Folienschlauch um zu verpackende Gegenstände bilden und entlang der Verpackungsrichtung mit Längssiegeleinheiten verschließen. Die Folienschläuche können nebeneinander durch die Horizontalquersiegeleinheit transportiert werden. Die Horizontalquersiegeleinheit verschließt die Folienschläuche vor und hinter den zu verpackenden Gegenständen bevorzugt in einem gemeinsamen Siegelvorgang. Die Horizontalquersiegeleinheit verschließt den Folienschlauch bevorzugt mit einer Quersiegelnaht, die zumindest im Wesentlichen quer zur Verpackungsrichtung angeordnet ist. Unter "quer" soll in diesem Zusammenhang insbesondere eine Richtung verstanden werden, die weniger als 45°, bevorzugt weniger als 20°, besonders bevorzugt um weniger als 10° von einer Senkrechten zur Verpackungsrichtung abweicht. Bevorzugt ist die Siegelnaht zumindest im Wesentlichen horizontal angeordnet. Besonders bevorzugt verschließt die Horizontalquersiegeleinheit in einem Siegelvorgang gleichzeitig ein in Verpackungsrichtung hinteres Ende einer Packung sowie ein in Verpackungsrichtung vorderes Ende einer nachfolgenden Packung. Besonders bevorzugt trennt die Horizontalquersiegeleinheit in demselben Arbeitsschritt den die Packungen bildenden Folienschlauch und somit die aufeinanderfolgenden Packungen. Die Horizontalquersiegeleinheit versiegelt den Folienschlauch, indem die Siegelbacken die Materiallagen von gegenüberliegenden Seiten des Folienschlauchs zusammenpressen. Die Materiallagen können bevorzugt Siegelschichten aufweisen, die ein Verbinden der Materiallagen fördern. Die Siegelschichten können insbesondere eine Schicht aufweisen, die insbesondere durch Druck eine Verbindung mit der weiteren Siegelschicht bildet, wie ein Kontaktkleber. Die Siegelbacken können beheizt sein und neben Druck Wärme an die Materiallagen abgeben. Die Siegelschichten können eine Schicht aufweisen, die insbesondere bei einer Erwärmung bei einer niedrigeren Temperatur als eine Außenseite der Materialbahn schmilzt und mit der weiteren Siegelschicht eine Verbindung bildet, insbesondere ein Polymer mit einer tieferen Schmelztemperatur als die Außenseite und/oder Trägerschicht der Materialbahn. Die Siegelschichten können aufschmelzen und sich so verbinden. Ein Schmelzen der Außenseite der Materialbahn bei einem Kontakt mit den Siegelbacken kann vermieden werden. Der Fachmann kennt weitere Verfahren, die ein Versiegeln der Materiallagen fördern, wie zum Beispiel die Beaufschlagung der Siegelbacken mit hochfrequenten Schwingungen (Ultraschallsiegeln). Unter einem "Siegelbackenpaar" sollen in diesem Zusammenhang insbesondere Siegelbacken verstanden werden, die dazu vorgesehen sind, sich gemeinsam von gegenüberliegenden Seiten der Materiallagen des Folienschlauchs an diesen anzunähern und diesen zu versiegeln. Unter "um eine Rotationsachse rotieren" soll in diesem Zusammenhang insbesondere verstanden werden, dass die Siegelbacken in einer geschlossenen Bahn um die Rotationsachse bewegt werden. Die geschlossene Bahn befindet sich bevorzugt zumindest im Wesentlichen in einer zur Rotationsachse senkrechten Ebene. Unter "zumindest im Wesentlichen" soll in diesem Zusammenhang insbesondere verstanden werden, dass ein von der Bahn aufgespannter Raum in einer Richtung senkrecht zur Rotationsachse eine Erstreckung von weniger als 25%, bevorzugt von weniger als 10%, besonders bevorzugt weniger als 5% eines größten Bahndurchmessers aufweist. Bevorzugt rotieren die Siegelbacken um die Rotationsachse zumindest teilweise auf einer elliptischen Bahn. Besonders bevorzugt rotieren die Siegelbacken um die Rotationsachse zumindest teilweise auf einer Kreisbahn. Unter "zumindest teilweise" soll in diesem Zusammenhang insbesondere verstanden werden, dass zumindest 2/3, bevorzugt 3/4, besonders bevorzugt die gesamte geschlossene Bahn um die Rotationsachse zumindest im Wesentlichen einer elliptischen Bahn beziehungsweise einer Kreisbahn folgt. Unter "zumindest im Wesentlichen" soll in diesem Zusammenhang insbesondere eine Abweichung von weniger als 10%, bevorzugt von weniger als 5%, besonders bevorzugt von weniger als 1% vom Durchmesser der elliptischen Bahn beziehungsweise der Kreisbahn verstanden werden. Die Rotationsachsen sind bevorzugt im Wesentlichen senkrecht zur Verpackungsrichtung parallel zur Horizontalen und zumindest im Wesentlichen parallel zur Richtung der durch die Horizontalquersiegeleinheit gebildeten Quersiegelnähte angeordnet. Bevorzugt sind die Rotationsachsen eines Siegelbackenpaars zumindest im Wesentlichen in einer Ebene senkrecht zur Verpackungsrichtung angeordnet. Unter "zumindest im Wesentlichen" soll in diesem Zusammenhang insbesondere eine Abweichung von weniger als 10°, bevorzugt von weniger als 5°, besonders bevorzugt von weniger als 1° verstanden werden. Bevorzugt enthält eine Siegelbacke des Siegelbackenpaars ein Quetschmesser und eine weitere Siegelbacke des Siegelbackenpaars einen Gegenhalter. Der Folienschlauch kann zwischen dem Quetschmesser und dem Gegenhalter durchtrennt werden. Unter einem "Siegelantrieb" soll insbesondere eine Vorrichtung verstanden werden, die dazu vorgesehen ist, zumindest eine Siegelbacke auf der geschlossenen Bahn um die Rotationsachsen zu bewegen. Bevorzugt ist der Siegelantrieb dazu vorgesehen, die Siegelbacken zumindest eines Siegelbackenpaars um seine Rotationsachsen zu bewegen. Der Siegelantrieb kann Mittel zur beweglichen Lagerung der Siegelbacken entlang der Bahn enthalten. Der Siegelantrieb kann eine Antriebseinheit enthalten, wie einen elektrischen Motor. Der Siegelantrieb kann eine Getriebeeinheit enthalten. Siegelantriebe können durch einen gemeinsamen Antrieb angetrieben werden. Eine Einstelleinheit kann dazu vorgesehen sein, die Siegelantriebe zumindest zweier Siegelbackenpaare unabhängig voneinander anzutreiben. Die Einstelleinheit kann zum Beispiel von einem Getriebe mit einer einstellbaren und/oder variablen Übersetzung gebildet und eine Antriebsbewegung des Antriebs mit einer einstellbaren Übersetzung an die Siegelantriebe übertragen werden. Unter "unabhängig voneinander antreiben" soll in diesem Zusammenhang insbesondere verstanden werden, dass die Siegelantriebe sowohl eine Position um die Rotationsachsen als auch eine Geschwindigkeit und Beschleunigung einer Siegelbacke oder eines Siegelbackenpaars in einem zulässigen Bereich unabhängig von der Position, Geschwindigkeit und Beschleunigung zumindest einer weiteren Siegelbacke oder eines weiteren Siegelbackenpaars einstellen kann. Unter "Positionen in einem zulässigen Bereich" sollen in diesem Zusammenhang insbesondere Positionen einer Siegelbacke oder eines Siegelbackenpaars verstanden werden, welche eine Kollision der Siegelbacke oder des Siegelbackenpaars mit der zumindest einen weiteren Siegelbacke oder eines weiteren Siegelbackenpaars vermeiden. Der zulässige Bereich kann insbesondere durch zulässige Einstellwinkel, ausgehend von einem Grundwinkel, zwischen benachbarten Siegelbacken mit gemeinsamer Rotationsachse definiert sein. Ein Siegelbackenpaar kann während eines Siegelvorgangs vorteilhaft mit einer mit dem Folienschlauch synchronisierten Verpackungsgeschwindigkeit bewegt werden. Eine Relativbewegung des Siegelbackenpaars in Bewegungsrichtung des Folienschlauchs kann vermindert und/oder vermieden werden. Eine Siegelqualität kann erhöht werden. Ein Siegelantrieb kann vorteilhaft ein Siegelbackenpaar nach dem Siegelvorgang so um die Rotationsachsen bewegen, dass es, nachdem der Folienschlauch um eine oder mehrere Packungslängen weiterbewegt wurde, eine nächste Quersiegelnaht am Folienschlauch bilden kann. Packungslänge und Bahnlänge der Siegelbacken um die Rotationsachsen können abweichen. Die Siegelbacken können entlang der Bahn entsprechend teilweise schneller und/oder langsamer als eine Verpackungsgeschwindigkeit in Verpackungsrichtung bewegt werden. Dieser Geschwindigkeitsausgleich ist dem Fachmann als "Hinkbewegung" bekannt. Für die Hinkbewegung eines Siegelbackenpaars steht die Bahn der Siegelbacken um die Rotationsachse zur Verfügung, in der alle von einem gemeinsamen Antrieb angetriebenen Siegelbackenpaare mit dem Folienschlauch kontaktlos sind. Werden dagegen alle Siegelbackenpaare von einem gemeinsamen Antrieb angetrieben, kann eine Hinkbewegung nur während den Bahnabschnitten stattfinden, in denen alle Siegelbackenpaare mit dem Folienschlauch kontaktlos sind. Es steht ein kurzes Zeitfenster für die Hinkbewegung zur Verfügung. Werden zumindest zwei Siegelbackenpaare unabhängig angetrieben, steht ein vorteilhaft längeres Zeitfenster für die Hinkbewegung zur Verfügung. Bevorzugt wird jedes Siegelbackenpaar von einem eigenen Antrieb angetrieben. Das Zeitfenster, das für die Hinkbewegung zur Verfügung steht, kann besonders lang sein. Beschleunigungen während der Hinkbewegung können geringer sein. Abweichungen der Bahnlänge von der Packungslänge können größer sein. Eine Verpackungsgeschwindigkeit kann erhöht werden. In einer weiteren, vorteilhaften Ausgestaltung der Erfindung können die Siegelantriebe dazu vorgesehen sein, jede der Siegelbacken unabhängig voneinander anzutreiben. Bevorzugt ist jeweils ein Siegelantrieb zum unabhängigen Antrieb einer Siegelbacke vorgesehen. Bevorzugt können Siegelantriebe eines Siegelbackenpaars zumindest während eines Siegelvorgangs synchronisiert angetrieben werden. Insbesondere kann ein Siegelantrieb einen Primärteil oder Sekundärteil eines Linearmotors aufweisen. Bevorzugt kann die Siegelbacke formschlüssig und/oder kraftschlüssig mit dem Siegelantrieb verbunden sein. Eine besonders flexible Optimierung der Hinkbewegung kann möglich sein. Eine Bewegung jeder Siegelbacke kann zumindest weitgehend unabhängig von weiteren Siegelbacken optimiert werden. Eine synchrone Bewegung von Siegelbacken mit einer weiteren Siegelbacke eines Siegelbackenpaars kann auf die Zeitdauer eines Siegelvorgangs begrenzt sein.

Weiter wird vorgeschlagen, dass die Siegelantriebe jeweils eine um die erste Rotationsachse und eine um die zweite Rotationsachse rotierende Siegelwelle aufweisen, an denen jeweils zumindest eine Siegelbacke zumindest eines Siegelbackenpaars angeordnet ist. Unter "angeordnet" soll in diesem Zusammenhang insbesondere gelagert verstanden werden. Insbesondere können die Siegelbacken mit den Siegelwellen kraft- und/oder bevorzugt formschlüssig verbunden sein. Es kann eine besonders kompakte und steife Lagerung der Siegelbacken erreicht werden. Es können besonders hohe Drehzahlen möglich sein, mit denen die Siegelbacken um die Rotationsachse bewegt werden, insbesondere mehr als 100 Umdrehungen/Minute, bevorzugt mehr als 250 Umdrehungen/Minute, besonders bevorzugt mehr als 500 Umdrehungen/Minute. Zwischen Siegelwellen und Siegelbacken können Feder- und/oder Dämpfungselemente vorgesehen sein. Die Feder- und/oder Dämpfungselemente können dazu vorgesehen sein, bei einem Siegelvorgang Toleranzen und/oder Dicken der Materiallagen des Folienschlauchs auszugleichen und/oder durch Einfedern bei einem Kontakt der Siegelbacken einen Siegeldruck zu erzeugen. Durch die Siegelwellen können die Siegelbacken besonders zuverlässig entlang einer Bahn geführt werden. Bevorzugt treibt ein Siegelantrieb die Siegelwellen eines Siegelbackenpaars gemeinsam an. Insbesondere kann ein Getriebe und/oder ein Zahnriemen die Antriebsbewegung zwischen den Siegelwellen eines Siegelbackenpaars übertragen. Die Siegelbacken eines Siegelbackenpaars können vorteilhaft synchron bewegt werden. Eine Annäherung der Siegelbacken eines Siegelbackenpaars zur Bildung einer Quersiegelnaht kann sichergestellt werden. Die Siegelbacken können besonders vorteilhaft auf einer Kreisbahn um die Rotationsachsen bewegt werden. Bevorzugt können die Rotationsachsen in einer Richtung senkrecht zur Verpackungsrichtung und senkrecht zur Horizontalen verschiebbar angeordnet sein. Ein Abstand der Rotationsachsen eines Siegelbackenpaars in einer Ausgangsstellung kann geringer sein als der doppelte Radius einer Kreisbahn, auf der sich die Siegelbackenpaare um die Rotationsachsen bewegen. Nähern sich die Siegelbacken bis auf eine Materiallagendicke des Folienschlauchs an, kann der Abstand zwischen den Rotationsachsen so weit vergrößert werden, dass die Siegelbacken einen Druck auf die Materiallagen ausüben, eine Kollision der Siegelbacken aber vermieden wird. Ein Weg entlang der Bahn der Siegelbackenpaare, entlang der das Siegelbackenpaar einen Druck auf die Materiallagen des Folienschlauchs ausübt, kann verlängert werden. Eine Siegelzeit kann vorteilhaft verlängert werden.

Weiter wird eine Steuereinheit vorgeschlagen, die dazu vorgesehen ist, ein Bewegungsprofil der Siegelantriebe zu optimieren. Unter einer "Steuereinheit" soll in diesem Zusammenhang insbesondere eine Motorsteuereinheit verstanden werden, die Antriebsmotoren der Siegelantriebe steuert und/oder regelt. Die Steuereinheit kann ein Bewegungsprofil der Siegelantriebe insbesondere während der Hinkbewegung optimieren, indem eine möglichst lange Zeitspanne für die Hinkbewegung genutzt wird. Unter einem "Bewegungsprofil" eines Siegelantriebs soll in diesem Zusammenhang insbesondere ein Beschleunigungs- und Geschwindigkeitsverlauf während eines Umlaufs von vom Siegelantrieb angetriebenen Siegelbacken verstanden werden. Insbesondere kann das Bewegungsprofil besonders geringe Beschleunigungsmaxima aufweisen. Vorteilhaft kann eine Hinkbewegung zumindest während eines Großteils der Bahn einer Siegelbacke um die Rotationsachse stattfinden, in der sie mit dem Folienschlauch kontaktfrei ist. Unter einem "Großteil" soll in diesem Zusammenhang mehr als 50%, bevorzugt mehr als 70%, besonders bevorzugt mehr als 90% der Bahnlänge verstanden werden, in der die Siegelbacke kontaktfrei mit dem Folienschlauch ist. Bevorzugt kann die Hinkbewegung während mehr als der Hälfte der Bahn einer Siegelbacke um die Rotationsachse ausgeführt werden, besonders bevorzugt während mehr als 2/3 der Bahn. Ein Ausgleich zwischen der Packungslänge und der Bahnlänge der Siegelbacken um die Rotationsachsen kann besonders wirksam sein. Eine Antriebsleistung kann verringert werden. Ein Energieverbrauch der Siegelantriebe kann vermindert werden. Eine Lebensdauer der Siegelantriebe kann erhöht werden. Lärm und/oder Vibrationen können verringert werden. Eine Verpackungsgeschwindigkeit kann erhöht werden. Es können aus einem in Verpackungsrichtung zugeführten Folienschlauch mehr als 200 Packungen pro Minute gebildet werden, bevorzugt mehr als 600 Packungen pro Minute, besonders bevorzugt mehr als 1200 Packungen pro Minute. Ein Austauschen der Quersiegeleinheit mit einer der Verpackungslänge angepassten Quersiegeleinheit kann vermieden werden. Die Steuereinheit kann das Bewegungsprofil der Siegelantriebe abhängig von einer veränderlichen Packungslänge optimieren. Aufeinanderfolgende zu verpackende Gegenstände können unterschiedliche Längen aufweisen. Eine Verpackungslänge kann der Länge der zu verpackenden Gegenstände angepasst werden. Die Materialbahn kann Markierungen enthalten, die die Packungslänge vorgeben. Aufeinanderfolgende Packungslängen können unterschiedlich sein. Eine Vorrichtung kann dazu vorgesehen sein, die Länge der zu verpackenden Gegenstände und/oder die von Markierungen der Materialbahn vorgegebene Packungslänge zu erkennen. Die Steuereinheit kann das Bewegungsprofil der Siegelantriebe so optimieren, dass Packungen mit der gewünschten Länge gebildet werden. Insbesondere kann die Steuereinheit während der Hinkbewegung die Siegelbacken so beschleunigen und/oder abbremsen, dass eine nächste Quersiegelnaht nach einer gewünschten, veränderlichen Packungslänge gebildet wird.

Weiter wird vorgeschlagen, dass zwei Siegelantriebe in Richtung der gemeinsamen Rotationsachsen zueinander gegenüberliegend angeordnet sind. Es kann eine besonders effektive und platzsparende Anordnung erreicht werden. Zwei Siegelantriebe können besonders einfach unabhängig angetriebene Siegelwellen mit gemeinsamer Rotationsachse aufweisen.

Weiter wird zumindest eine Stützwelle vorgeschlagen, mit der sich Siegelwellen mit gemeinsamer Rotationsachse gegenseitig abstützen. Unter einer "Stützwelle" soll in diesem Zusammenhang insbesondere eine Welle verstanden werden, die mit Siegelwellen mit einer gemeinsamen Rotationsachse verbunden ist. Die Stützwelle kann Bestandteil einer der Siegelwellen sein. Die Stützwelle ist bevorzugt zumindest in weiteren Siegelwellen drehbar gelagert. Die Siegelwellen können vorteilhaft unabhängig angetrieben werden. Die Stützwelle kann insbesondere Querkräfte und/oder Biegemomente zwischen den Siegelwellen abstützen. Eine Steifigkeit der Lagerung der Siegelwellen insbesondere bei einer Belastung mit Querkräften kann erhöht werden. Ein Durchbiegen der Siegelwellen kann verringert werden. Eine Genauigkeit der Lagerung der Siegelwellen und/oder der Siegelbacken kann erhöht werden.

Weiter wird vorgeschlagen, dass zumindest eine Siegelwelle eines Siegelbackenpaars zumindest einen Stützbereich aufweist, an dem sich zumindest eine Siegelbacke eines weiteren Siegelbackenpaars mit gemeinsamer Rotationsachse abstützt. Der Stützbereich kann insbesondere als Lagerfläche ausgebildet sein, bevorzugt als rotationssymmetrische, besonders bevorzugt als zylindrische Lagerfläche. Die Siegelbacke des weiteren Siegelbackenpaars enthält bevorzugt eine Lagerfläche mit einer dem Stützbereich angepassten Geometrie. Der Stützbereich kann insbesondere dazu vorgesehen sein, von der Siegelbacke des weiteren Siegelbackenpaars eine Druckkraft aufzunehmen. Eine durch die Ausübung eines Drucks auf die zu versiegelnden Materiallagen und/oder einem Trennen des Folienschlauchs mit Hilfe eines Quetschmessers auf die Siegelbacke ausgeübter Druck kann besonders gut abgestützt werden. Ein Durchbiegen der Siegelbacke und/oder der Siegelwelle des weiteren Siegelbackenpaars bei einem Siegelvorgang kann verringert werden. Die Siegelbacken können besonders steif gelagert sein. Erfindungsgemäß wird zumindest eine Stützeinheit vorgeschlagen, die dazu vorgesehen ist, einen Spalt zwischen in einer Rotationsrichtung benachbarten Siegelbacken mit gemeinsamer Rotationsachse zumindest teilweise zu überbrücken. Unter einem "Spalt" soll in diesem Zusammenhang eine, bezogen auf eine Vertiefung zwischen den Siegelbacken in Richtung der gemeinsamen Rotationsachse, bezogen auf eine von den Siegelflächen der Siegelbacken überstrichene Fläche verstanden werden. Unter "zumindest teilweise überbrücken" soll in diesem Zusammenhang insbesondere verstanden werden, dass die Stützeinheit eine Tiefe der Vertiefung zumindest in Teilbereichen des Spalts zumindest verringert. Insbesondere kann zumindest zwischen den Siegelbacken, die sich um eine in Richtung einer Schwerkraft unterhalb des Folienschlauchs angeordnete Rotationsachse bewegen, eine Stützeinheit aufweisen. Ein "Durchhängen" des Folienschlauchs in den Spalt zwischen den Siegelbacken kann vorteilhaft vermieden oder verringert werden. Eine Packungsqualität kann erhöht werden. Insbesondere können auch schwere zu verpackende Gegenstände im Folienschlauch durch die Horizontalquersiegeleinheit getragen werden.
In einer bevorzugten Ausgestaltung wird vorgeschlagen, dass die Stützeinheit zumindest zwei ineinander greifende Stützkämme aufweist, die an den benachbarten Siegelbacken befestigt sind. Unter einem "Stützkamm" soll insbesondere ein flächiges Bauteil verstanden werden, welches auf seiner der Siegelbacke abgewandten Seite kammartige Zähne aufweist. Die Zähne sind gegenüber Zähnen des gegenüberliegenden Stützkamms der benachbarten Siegelbacke so versetzt angeordnet, dass die Zähne ineinander greifen können, wenn sich die beiden Siegelbacken annähern. Bevorzugt greifen die Zähne berührungslos ineinander. Eine Form der Fläche, die der Stützkamm aufspannt, ist bevorzugt der Fläche angepasst, die die Siegelflächen der Siegelbacken bei ihrer Bewegung überstreichen. Bewegen sich die Siegelflächen entlang einer Kreisbahn und überstreichen so eine Hohlzylinderfläche, bilden die Stützkämme bevorzugt Abschnitte einer Zylinderfläche. Die Stützkämme können gegenüber den Siegelflächen etwas in Richtung der Rotationsachse zurückversetzt sein und/oder eine Zylinderfläche mit einem etwas geringeren Radius als der Abstand der Siegelflächen zur Rotationsachse aufweisen. Die Stützeinheit kann mit Stützkämmen einfach und wirksam ausgebildet werden. Eine Stützfunktion kann sichergestellt werden. Die Siegelbacken mit unabhängigen Antrieben können auch mit einer an den Siegelbacken angeordneten Stützeinheit unabhängig angetrieben werden. Ein zulässiger Bereich, in dem die Siegelbacken unabhängig bewegt werden können, kann groß sein.

Weiter wird zumindest ein Ausgleichsgewicht vorgeschlagen, das Zentrifugalkräfte einer an einer Siegelwelle angeordneten Siegelbacke zumindest teilweise ausgleicht. Unter "zumindest teilweise ausgleicht" soll in diesem Zusammenhang insbesondere verstanden werden, dass bezogen auf die Rotationsachsen zumindest Querkräfte, die durch die Rotation der Siegelbacken um die Rotationsachsen hervorgerufen werden, zumindest weitgehend ausgeglichen werden. Bevorzugt ist das Ausgleichsgewicht an der Siegelwelle angeordnet. Unter "zumindest weitgehend" soll in diesem Zusammenhang zumindest zu 75%, bevorzugt zumindest zu 85%, besonders bevorzugt zumindest zu 95% verstanden werden. Vibrationen können reduziert werden. Eine Laufruhe der Horizontalquersiegeleinheit kann erhöht werden. Eine Lebensdauer kann verlängert werden.

Weiter wird eine horizontale Schlauchbeutelmaschine mit einer Horizontalquersiegeleinheit vorgeschlagen. Die horizontale Schlauchbeutelmaschine kann die genannten Vorteile der Horizontalquersiegeleinheit aufweisen. Insbesondere kann die horizontale Schlauchbeutelmaschine Schlauchbeutel mit unterschiedlichen Packungslängen und Packungshöhen mit einer hohen Leistung herstellen. Die Horizontalquersiegeleinheit kann die Packungslängen ohne Umbau durch eine vorteilhafte Hinkbewegung mit vergleichsweise geringen Beschleunigungen ausgleichen. Der Folienschlauch mit zu verpackenden Gegenständen kann von einem Zufuhrträger aus durch die Horizontalquersiegeleinheit mit der Stützeinheit getragen werden, wobei ein Durchhängen vermieden werden kann. Eine hohe Packungsqualität und eine hohe Zuverlässigkeit kann sichergestellt werden.

### Zeichnung

Weitere Vorteile ergeben sich aus der folgenden Zeichnungsbeschreibung. In der Zeichnung sind vier Ausführungsbeispiele der Erfindung dargestellt.

Es zeigen:
- Fig. 1: eine schematische Darstellung einer Siegeleinheit mit einer Horizontalquersiegeleinheit,
- Fig. 2: eine schematische Darstellung von Teilen der Horizontalquersiegeleinheit,
- Fig. 3: eine schematische Darstellung von Grundwinkeln und Einstellwinkeln zweier Siegelbacken zweier Siegelbackenpaare,
- Fig. 4: eine schematische Darstellung eines Quersiegelprozesses,
- Fig. 5: eine schematische Darstellung von Teilen einer Horizontalquersiegeleinheit in einem zweiten Ausführungsbeispiel,
- Fig. 6: eine schematische Darstellung von Teilen einer Horizontalquersiegeleinheit in einem dritten Ausführungsbeispiel,
- Fig. 7: eine schematische Darstellung von Teilen einer Horizontalquersiegeleinheit in einem vierten Ausführungsbeispiel und
- Fig. 8: eine schematische Darstellung einer horizontalen Schlauchbeutelmaschine.

### Beschreibung der Ausführungsbeispiele

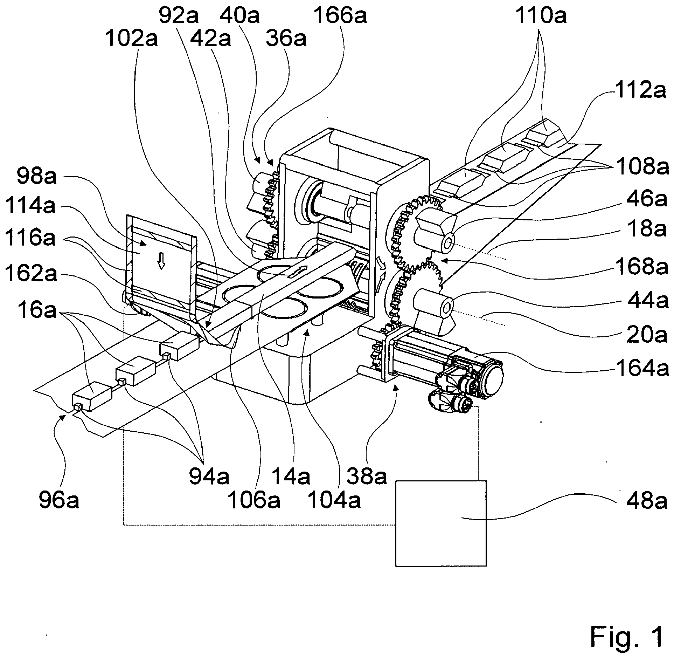

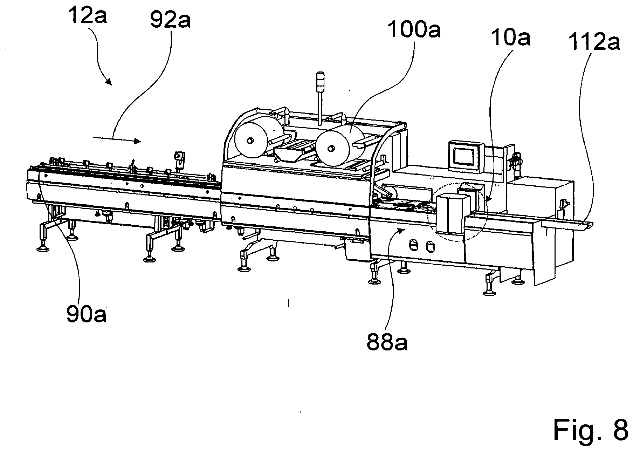

Figur 8 zeigt eine horizontale Schlauchbeutelmaschine 12a mit einer Siegeleinheit 88a. Zu verpackende Gegenstände 16a (Figur 1) werden einbahnig auf einem Zuführträger 90a in einer horizontalen Verpackungsrichtung 92a mittels Mitnehmern 94a einer Zufuhrkette 96a zur Siegeleinheit 88a geführt. Eine Materialbahn 98a wird von einer Packstoffrolle 100a abgerollt und der Siegeleinheit 88a zugeführt. Um eine hier nur schematisch dargestellte Formschulter 102a wird aus der Materialbahn 98a ein Folienschlauch 14a um die in Verpackungsrichtung 92a der Siegeleinheit 88a zugeführten Gegenstände 16a geformt. Der Folienschlauch 14a wird unter den Gegenständen 16a durch eine Horizontallängssiegeleinheit 104a entlang einer Längssiegelnaht 106a in Verpackungsrichtung 92a verschlossen. Es folgt eine Horizontalquersiegeleinheit 10a, die den Folienschlauch 14a um die zu verpackenden Gegenstände 16a entlang von Quersiegelnähten 108a verschließt und so verschlossene Packungen 110a mit Gegenständen 16a bildet und diese vom Folienschlauch 14a abtrennt. Die Horizontalquersiegeleinheit 10a bildet dabei jeweils gleichzeitig die entgegen der Verpackungsrichtung 92a zweite Quersiegelnaht 108a einer die Horizontalquersiegeleinheit 10a verlassenden Packung 110a sowie die entgegen der Verpackungsrichtung 92a erste Quersiegelnaht 108a der nachfolgenden, in die Horizontalquersiegeleinheit 10a eintretenden Packung 110a. In demselben Schritt trennt die Horizontalquersiegeleinheit 10a den Folienschlauch 14a zwischen den Quersiegelnähten 108a der beiden Packungen 110a und trennt somit die beiden Packungen 110a. Die Packungen 110a werden auf einem Auslaufband 112a von der Siegeleinheit 88a abtransportiert.

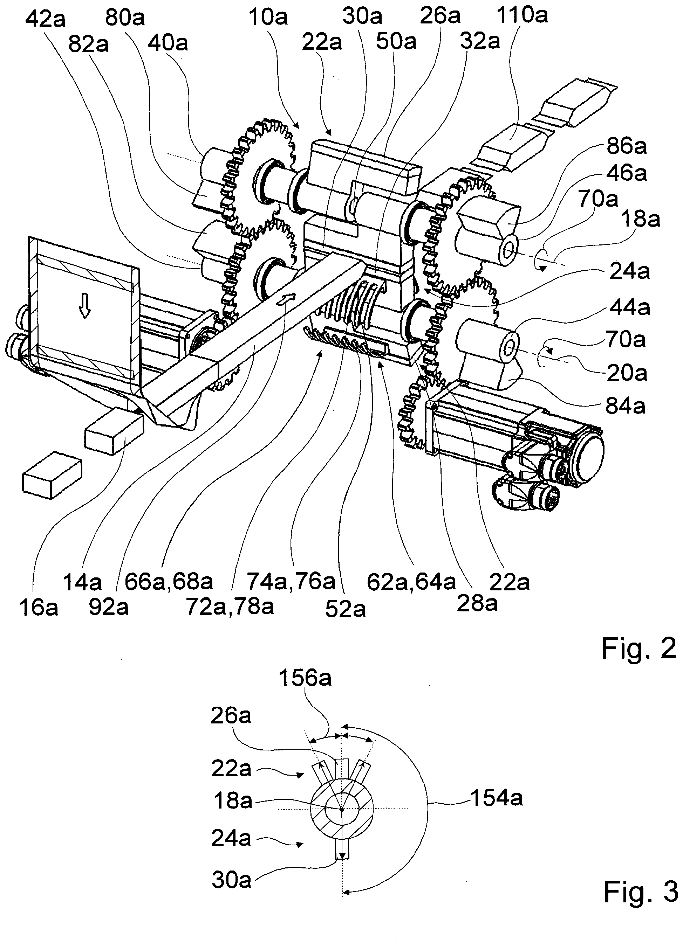

Figur 1 und Figur 2 zeigen die Horizontalquersiegeleinheit 10a zum Verschließen des Folienschlauchs 14a um die zu verpackenden Gegenstände 16a mit einer ersten und einer zweiten, zueinander parallelen Rotationsachse 18a, 20a. Zwei Siegelbackenpaare 22a, 24a werden von jeweils einer um die erste Rotationsachse 18a rotierenden Siegelbacke 26a, 30a und jeweils einer um die zweite Rotationsachse 20a rotierenden Siegelbacke 28a, 32a gebildet. Bei einem Siegelvorgang nähern sich abwechselnd die Siegelbacken 26a, 28a und die Siegelbacken 30a, 32a eines ersten Siegelbackenpaars 22a und eines zweiten Siegelbackenpaars 24a an. Zwischen den Siegelbacken 26a, 28a und den Siegelbacken 30a, 32a werden bei einer Annäherung Materiallagen 34a der Materialbahn 98a unter Ausübung von Druck versiegelt. Die Materialbahn 98a weist auf ihrer den zu verpackenden Gegenständen 16a zugewandten Innenseite 114a eine Siegelschicht 116a auf, die unter Druck mit der Siegelschicht 116a der beim Bilden des Folienschlauchs 14a gegenüberliegenden Innenseite 114a der Materialbahn 98a die Quersiegelnaht 108a bildet. Die Siegelbacken 26a, 28a, 30a, 32a können zusätzlich beheizt sein, um die Bildung von Siegelnähten durch ein Aufschmelzen der Siegelschicht 116a zu unterstützen. Zwei unabhängig antreibbare Siegelantriebe 36a, 38a sind dazu vorgesehen, die zwei Siegelbackenpaare 22a, 24a voneinander unabhängig anzutreiben. Der Siegelantrieb 36a weist eine um die erste Rotationsachse 18a rotierende Siegelwelle 40a und eine um die zweite Rotationsachse 20a rotierende Siegelwelle 42a des ersten Siegelbackenpaars 22a auf, der Siegelantrieb 38 weist entsprechend Siegelwellen 44, 46 des zweiten Siegelbackenpaars 24a auf, die um die Rotationsachsen 18a, 20a rotieren. An der Siegelwelle 40a ist die Siegelbacke 26a, an der Siegelwelle 42a ist die Siegelbacke 28a, an der Siegelwelle 44a ist die Siegelbacke 32a und an der Siegelwelle 46a ist die Siegelbacke 30a angeordnet. Die zwei Siegelantriebe 36a, 38a sind in Richtung der gemeinsamen Rotationsachsen 18a, 20a zueinander gegenüberliegend angeordnet. Die Siegelantriebe 36a, 38a weisen jeweils einen Motor 162a, 164a auf sowie ein Getriebe 166a, 168a. Der Motor 162a treibt über das Getriebe 166a die beiden Siegelwellen 40a und 42a des Siegelbackenpaars 22a gemeinsam an. Der Motor 164a treibt über das Getriebe 168a die beiden Siegelwellen 44a und 46a des Siegelbackenpaars 24a gemeinsam an. In einer alternativen Ausgestaltung wäre es auch denkbar, dass jede Siegelwelle 40a, 42a, 44a, 46a über einen eigenen Motor verfügt, und die Motoren eines Siegelbackenpaars 22a, 24a durch eine elektrische Steuerung synchronisiert angetrieben werden. Die Getriebe 166a, 168a könnten entfallen. Die Siegelwellen 40a, 42a, 44a, 46a mit gemeinsamer Rotationsachse 18a, 20a stützen sich jeweils mit einer Stützwelle 50a, 52a gegenseitig ab. Die Stützwellen 50a, 52a sind in den jeweiligen Siegelwellen 40a, 42a, 44a, 46a, die sich mit ihnen abstützen, drehbar gelagert. Vier Ausgleichsgewichte 80a, 82a, 84a, 86a gleichen Zentrifugalkräfte der an den Siegelwellen 40a, 42a, 44a, 46a angeordneten Siegelbacken 26a, 28a, 30a, 32a teilweise aus. Insbesondere gleichen die Siegelbacken 26a, 28a, 30a, 32a die durch die Zentrifugalkräfte auftretenden Querkräfte aus. Zwei Stützeinheiten 62a, 64a sind dazu vorgesehen, einen Spalt 66a, 68a zwischen in einer Rotationsrichtung 70a benachbarten Siegelbacken 28a, 32a mit gemeinsamer Rotationsachse 20a teilweise zu überbrücken. Die Stützeinheiten 62a, 64a weisen jeweils zwei ineinander greifende Stützkämme 72a, 74a, 76a, 78a auf, die an den benachbarten Siegelbacken 28a, 32a befestigt sind. Die Bezugszeichen der in der Figur 2 teilweise oder vollständig verdeckten Stützkämme 76a, 78a sowie der Stützeinheit 64a und des Spalts 68a verweisen in der Figur 2 der besseren Sichtbarkeit halber auf die entsprechenden Stützkämme 72a, 74a, die Stützeinheit 62a und den Spalt 66a. Die Stützeinheiten 62a, 64a verhindern, dass der Folienschlauch 14a mit den zu verpackenden Gegenständen 16a zwischen den Siegelbacken 28a, 32a durchhängt, was die Packungsqualität beeinträchtigen könnte.

In Figur 3 sind Grundwinkel 154a und Einstellwinkel 156a zweier Siegelbacken 26a, 30a zweier Siegelbackenpaare 22a, 24a vereinfacht dargestellt. In einer Grundstellung sind die Siegelbacken 26a, 30a in einem Grundwinkel 154a von 180° gegenüberliegend um die Rotationsachse 18a angeordnet. Am Beispiel der Siegelbacke 26a ist ein Einstellwinkel 156a dargestellt, um den die Siegelbacke 30a gegenüber der Siegelbacke 26a verstellt werden kann. Die Siegelbacken 28a, 32a, die um die Rotationsachse 20a angeordnet sind, werden entsprechend eingestellt. Der Einstellwinkel 156a wird maximal so gewählt, dass die Siegelbacken 26a, 30a sowie 28a, 32a sowie die in dieser Abbildung nicht dargestellten Stützkämme 72a, 74a, 76a, 78a der Stützeinheiten 62a, 64a kollisionsfrei bleiben. Innerhalb dieses zulässigen Bereichs des Einstellwinkels 156a können die Siegelbacken 26a, 30a sowie 28a, 32a der beiden Siegelbackenpaare 22a, 24a unabhängig angetrieben werden.

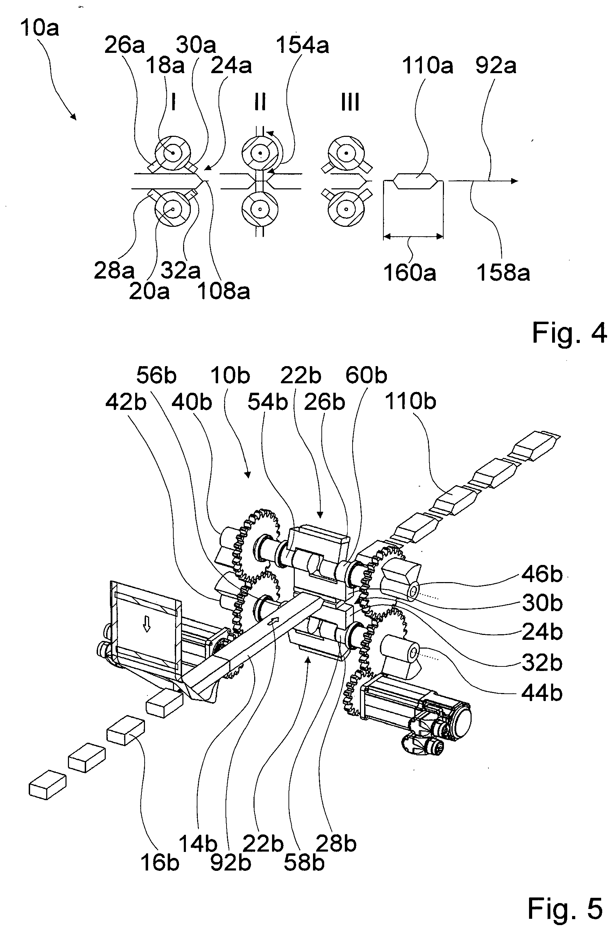

Figur 4 zeigt schematisch wiederum vereinfacht und ohne Darstellung der Stützeinheiten 62a, 64a die Bewegung der Siegelbacken 26a, 28a, 30a, 32a während dreier Prozessschritte I, II, III bei einer Herstellung von Packungen 110a. In einem ersten Prozessschritt I werden die Siegelbacken 26a und 28a des Siegelbackenpaars 22a mit einer Verpackungsgeschwindigkeit 158a in einer Verpackungsrichtung 92a synchronisiert, um eine Quersiegelnaht 108a zu erstellen. Die Siegelbacken 30a, 32a des Siegelbackenpaars 24a haben die Herstellung einer Quersiegelnaht 108a abgeschlossen und werden um die Rotationsachsen 18a, 20a beschleunigt, so dass sie, nachdem sich der Folienschlauch 14a um eine weitere Packungslänge 160a bewegt hat, die nächste Quersiegelnaht 108a erstellen können. Eine Packungslänge 160a ist im gezeigten Beispiel kürzer als die Bahn entlang des Umfangs um die Rotationsachsen 18a, 20a, entlang der die Siegelbacken 26a, 28a, 30a, 32a bewegt werden, so dass die Siegelbacken 30a, 32a gegenüber der Verpackungsgeschwindigkeit 158a beschleunigt werden müssen, um diesen Weg in der Zeit zurückzulegen, in der sich der Folienschlauch 14a um eine Packungslänge 160a weiterbewegt. Im Prozessschritt II haben die Siegelbacken 30a, 32a gegenüber den Siegelbacken 26a, 28a soweit aufgeholt, dass sie sich in einer Grundstellung mit einem Grundwinkel 154a von 180° zwischen den Siegelbacken 26a und 30a sowie 28a und 32a befinden. Die Siegelbacken 26a und 28a bilden die Quersiegelnaht 108a und trennen die Packungen 110a. Zu diesem Zeitpunkt bewegen sich die Siegelbacken 26a und 28a weiter synchronisiert mit der Verpackungsgeschwindigkeit 158a. Im Prozessschritt III haben die Siegelbacken 26a und 28a das Erstellen der Quersiegelnaht 108a beendet, so dass sie nun beschleunigt werden können. Die Siegelbacken 30a, 32a werden nun abgebremst und mit der Verpackungsgeschwindigkeit 158a zur Bildung der nächsten Quersiegelnaht 108a synchronisiert. Durch geeignetes Beschleunigen und/oder Abbremsen der Siegelbacken 26a, 28a, 30a, 32a des jeweils gerade nicht siegelnden Siegelbackenpaars 22a, 24a können mit derselben Horizontalquersiegeleinheit 10a unterschiedliche Packungslängen 160a erstellt werden. Dieser Bewegungsausgleich ist dem Fachmann als Hinkbewegung bekannt. Durch unabhängige Siegelantriebe 36a, 38a kann die Hinkbewegung eines Siegelbackenpaars 22a, 24a unabhängig von der Bewegung des weiteren Siegelbackenpaars 22a, 24a durchgeführt werden, insbesondere auch während eines der Siegelbackenpaare 22a, 24a gerade siegelt und mit der Verpackungsgeschwindigkeit 158a synchronisiert ist. Es steht ein längeres Zeitfenster für die Hinkbewegung zur Verfügung, so dass eine Maximalbeschleunigung minimiert werden kann.

Eine Steuereinheit 48a ist dazu vorgesehen, ein Geschwindigkeitsprofil der Hinkbewegung zu optimieren. Die Steuereinheit 48a steuert die Siegelantriebe 36a, 38a so an, dass sie nach dem Beenden eines Siegelvorgangs eines Siegelbackenpaars 22a, 24a zunächst gleichmäßig beschleunigt werden, um sie dann vor dem nächsten Siegelvorgang des Siegelbackenpaars 22a, 24a durch eine gleichmäßige Beschleunigung in Gegenrichtung wieder mit der Verpackungsgeschwindigkeit 158a zu synchronisieren. Wenn die Bahn, um die die Siegelbackenpaare 22a, 24a um die Rotationsachsen 18a, 20a bewegt werden, länger als die Packungslänge 160a ist, werden die Siegelbackenpaare 22a, 24a zunächst beschleunigt und dann wieder auf Verpackungsgeschwindigkeit 158a abgebremst. Wenn die Bahn, um die die Siegelbackenpaare 22a, 24a um die Rotationsachsen 18a, 20a bewegt werden, kürzer als die Packungslänge 160a ist, werden sie abgebremst und anschließend wieder auf Verpackungsgeschwindigkeit 158a beschleunigt. Die Geschwindigkeitsprofile zur Erhöhung sowie zum Abbremsen der Geschwindigkeit der Siegelbacken 26a, 28a, 30a, 32a sind ideal symmetrisch ausgebildet. Die Steuereinheit 48a optimiert die Geschwindigkeitsprofile insbesondere dahingehend, dass die maximal notwendigen Beschleunigungen minimal sind. In der Mitte eines Siegelvorgangs eines Siegelbackenpaars 22a, 24a liegen sich die Siegelbackenpaare 22a, 24a dann mit einem Grundwinkel 154a von 180° gegenüber.

Die nachfolgende Beschreibung und die Zeichnung weiterer Ausführungsbeispiele beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels verwiesen werden kann. Zur Unterscheidung der Ausführungsbeispiele sind anstelle des Buchstabens a des ersten Ausführungsbeispiels die Buchstaben b, c, und d den Bezugszeichen der weiteren Ausführungsbeispiele nachgestellt.

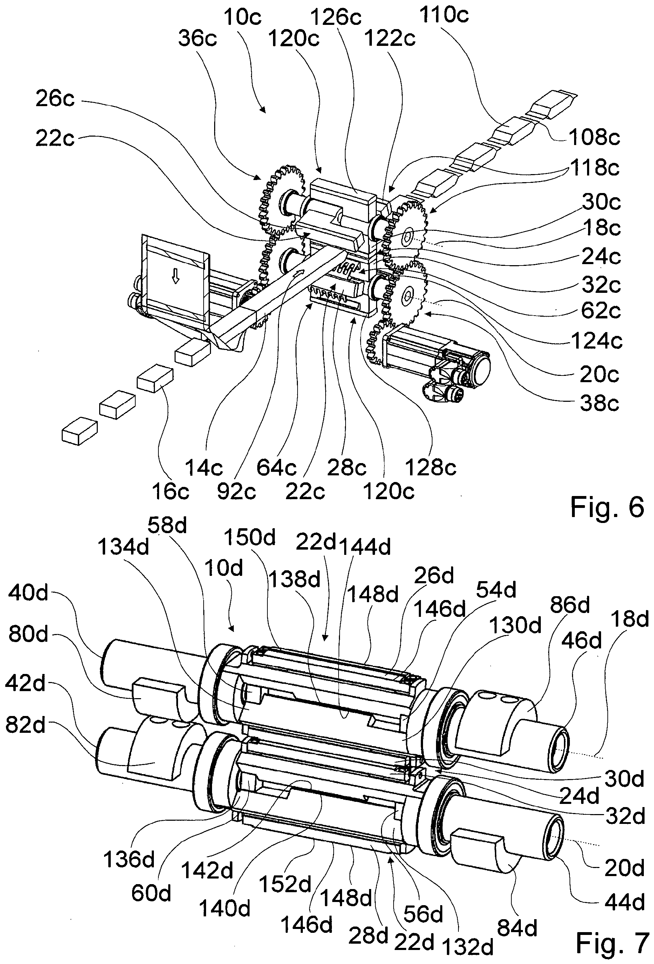

Figur 5 zeigt eine Horizontalquersiegeleinheit 10b in einem zweiten Ausführungsbeispiel. Die Horizontalquersiegeleinheit 10b unterscheidet sich vom vorangegangenen Ausführungsbeispiel insbesondere dadurch, dass die Siegelwellen 40b, 42b, 44b, 46b von Siegelbackenpaaren 22b, 24b jeweils einen Stützbereich 54b, 56b, 58b, 60b aufweisen, an dem sich eine Siegelbacke 26b, 28b, 30b, 32b des weiteren Siegelbackenpaars 22b, 24b mit gemeinsamer Rotationsachse 18b, 20b abstützt. Der Stützbereich 54b, 56b, 58b, 60b kann, wie im Ausführungsbeispiel gezeigt, mit den Siegelbacken 26b, 28b, 30b, 32b ein Gleitlager zeigen. Es ist aber auch denkbar, dass die Stützbereiche 54b, 56b, 58b, 60b jeweils als Außenring eines Kugellagers ausgebildet sind, um eine Reibung zwischen den Siegelbacken 26b, 28b, 30b, 32b und den Stützbereichen 54b, 56b, 58b, 60b zu vermeiden. Der Fachmann wird hier eine geeignete Ausbildung der Stützbereiche 54b, 56b, 58b, 60b wählen. Eine Lagerung der Siegelbacken 26b, 28b, 30b, 32b wird versteift und Biegemomente, die durch einen Siegeldruck erzeugt werden, können besser aufgenommen werden. Die Horizontalquersiegeleinheit 10b ist ebenfalls mit einer Stützeinheit, wie im vorangegangenen Ausführungsbeispiel gezeigt, ausgestattet (nicht in Figur 5 dargestellt). Figur 6 zeigt eine Horizontalquersiegeleinheit 10c in einem dritten Ausführungsbeispiel. Die Horizontalquersiegeleinheit 10c unterscheidet sich vom ersten Ausführungsbeispiel insbesondere dadurch, dass jeder der zwei Siegelantriebe 36c, 38c dazu vorgesehen ist, jeweils zwei Siegelbackenpaare 22c, 24c, 118c, 120c gemeinsam und unabhängig von den zwei weiteren Siegelbackenpaaren 22c, 24c, 118c, 120c anzutreiben. Der Siegelantrieb 36c treibt die Siegelbackenpaare 22c und 118c an, der Siegelantrieb 38c die Siegelbackenpaare 24c und 120c. Das erste Siegelbackenpaar 22c weist Siegelbacken 26c und 28c auf. Das zweite Siegelbackenpaar 24c weist Siegelbacken 30c und 32c auf. Das dritte Siegelbackenpaar 118c weist Siegelbacken 122c und 124c auf. Das vierte Siegelbackenpaar 120c weist Siegelbacken 126c und 128c auf. Um eine Rotationsachse 18c sind so vier Siegelbacken 26c, 30c, 122c, 126c angeordnet. Um eine Rotationsachse 20c sind die vier Siegelbacken 28c, 32c, 124c, 128c angeordnet. Sind die Siegelbacken 26c, 28c, 30c, 32c, 122c, 124c, 126c, 128c gleichmäßig um die Rotationsachsen 18c, 20c verteilt, spannen benachbarte Siegelbacken 26c, 28c, 30c, 32c, 122c, 124c, 126c, 128c jeweils einen Winkel von 90° auf. Jeweils zwei Siegelbacken 26c und 122c, 30c und 126c, 28c und 124c, 32c und 128c sind auf einer gemeinsamen Siegelwelle 40c, 42c, 44c, 46c angeordnet. Die Siegelantriebe 36c, 38c treiben so jeweils zwei Siegelbackenpaare 22c, 118c und 24c, 120c gemeinsam, aber unabhängig von den beiden weiteren Siegelbackenpaaren 24c, 120c und 22c, 118c an. Die Horizontalquersiegeleinheit 10c dieses Ausführungsbeispiels eignet sich aufgrund der doppelten Anzahl von Siegelbacken 26c, 28c, 30c, 32c, 122c, 124c, 126c, 128c insbesondere zur Herstellung von kurzen Packungen 110c. Zulässige Einstellwinkel sind geringer als beim vorhergehenden Beispiel. An den Siegelbacken 28c, 32c, 124c, 128c sind wie im ersten Ausführungsbeispiel Stützeinheiten 62c, 64c vorgesehen, wobei zwei weitere Stützeinheiten in der Figur 6 verdeckt und nicht dargestellt sind.

Figur 7 zeigt eine Horizontalquersiegeleinheit 10d in einem vierten Ausführungsbeispiel. Die Horizontalquersiegeleinheit 10d unterscheidet sich vom zweiten Ausführungsbeispiel insbesondere dadurch, dass Siegelbacken 26d, 28d, 30d, 32d an Endbereichen 130d, 132d, 134d, 136d an Siegelwellen 40d, 42d, 44d, 46d angeordnet sind. Um ein Durchbiegen der Siegelbacken 26d, 28d, 30d, 32d zu vermeiden, stützen sie sich an Stützbereichen 54d, 56d, 58d, 60d der Siegelwellen 40d, 42d, 44d, 46d ab. Zusätzlich können, wie in diesem Beispiel dargestellt, an den Siegelbacken 26d, 28d, 30d, 32d gegenüberliegende Stützbereiche 138d, 140d, 142d, 144d entlang von Rotationsachsen 18d, 20d angeordnet sein, an denen sich die gegenüberliegenden Siegelbacken 26d und 30d sowie 28d und 32d gegenseitig abstützen. Die Horizontalquersiegeleinheit 10d des vierten Ausführungsbeispiels kann besonders kompakt sein und einen geringen Durchmesser aufweisen. Die Horizontalquersiegeleinheit 10d ist besonders für die Herstellung von kurzen Packungen 110d und für einen Betrieb mit einer hohen Drehzahl geeignet. Die Siegelbacken 26d, 28d, 30d, 32d weisen jeweils zwei Siegelflächen 146d, 148d auf, zwischen denen bei den Siegelbacken 26d, 30d ein Messer 150d angeordnet ist. Bei den Siegelbacken 28d, 32d befindet sich zwischen den Siegelfächen 146d, 148d ein Gegenhalter 152d. Zwischen Messer 150d und Gegenhalter 152d wird unter Druck ein Folienschlauch 14d getrennt, so dass die Packungen 110d separiert werden. Zwischen den Siegelflächen 146d und 148d werden jeweils Quersiegelnähte 108d der Packungen 110d vor und nach der Trennstelle gebildet. Diese Ausbildung der Siegeflächen 146d, 148d und Messer 150d mit Gegenhalter 152d entspricht der nicht näher dargestellten Ausbildung der weiteren Ausführungsbeispiele.

## Patentansprüche

1. Horizontalquersiegeleinheit, insbesondere für eine horizontale Schlauchbeutelmaschine (12a-d) zum Verschließen zumindest eines Folienschlauchs (14a-d) um zumindest einen zu verpackenden Gegenstand (16a-d), mit einer ersten und einer zweiten, zueinander parallelen Rotationsachse (18a-d, 20a-d), und zumindest zwei Siegelbackenpaaren (22a-d, 24a-d, 118c, 120c), die jeweils von zumindest einer um die erste Rotationsachse (18a-d) rotierenden Siegelbacke (26a-d, 30a-d, 122c, 126c) und zumindest einer um die zweite Rotationsachse (20a-d) rotierenden Siegelbacke (28a-d, 32a-d, 124c, 128c) gebildet werden, so dass sich bei einem Siegelvorgang die Siegelbacken (26a-d, 28a-d, 30a-d, 32a-d, 122c, 124c, 126c, 128c) eines Siegelbackenpaars (22a-d, 24a-d, 118c, 120c) annähern und zwischen den Siegelbacken (26a-d, 28a-d, 30a-d, 32a-d, 122c, 124c, 126c, 128c) Materiallagen (34a-d) unter Ausübung von Druck versiegelbar sind, **gekennzeichnet durch** zumindest zwei unabhängig antreibbare Siegelantriebe (36a-d, 38a-d), die dazu vorgesehen sind, zumindest zwei Siegelbackenpaare (22a-d, 24a-d, 118c, 120c) voneinander unabhängig anzutreiben, und durch zumindest eine Stützeinheit (62a, 64a, 62c, 64c), die dazu vorgesehen ist, einen Spalt (66a, 68a) zwischen in einer Rotationsrichtung (70a, 70c) benachbarten Siegelbacken (28a, 32a, 28c, 32c) mit gemeinsamer Rotationsachse (20a, 20c) zumindest teilweise zu überbrücken.

2. Horizontalquersiegeleinheit nach Anspruch 1, **dadurch gekennzeichnet, dass** die Siegelantriebe (36a-d, 38a-d) jeweils eine um die erste Rotationsachse (18a-d) und eine um die zweite Rotationsachse (20a-d) rotierende Siegelwelle (40a-d, 42a-d, 44a-d, 46a-d) aufweisen, an denen jeweils zumindest eine Siegelbacke (26a-d, 28a-d, 30a-d, 32a-d, 122c, 124c, 126c, 128c) zumindest eines Siegelbackenpaars (22a-d, 24a-d,118c, 120c) angeordnet ist.

3. Horizontalquersiegeleinheit nach Anspruch 1 oder Anspruch 2,
**gekennzeichnet durch** eine Steuereinheit (48a-d), die dazu vorgesehen ist, ein Bewegungsprofil der Siegelantriebe (36a-d, 38a-d) zu optimieren.

4. Horizontalquersiegeleinheit nach einem der vorhergehenden Ansprüche, **dadurch gekennzeichnet, dass** zwei Siegelantriebe (36a-d, 38a-d) in Richtung der gemeinsamen Rotationsachsen (18a-d, 20a-d) zueinander gegenüberliegend angeordnet sind.

5. Horizontalquersiegeleinheit zumindest nach Anspruch 2, **gekennzeichnet durch** zumindest eine Stützwelle (50a, 52a), mit der sich Siegelwellen (40a, 42a, 44a, 46a) mit gemeinsamer Rotationsachse (18a, 20a) gegenseitig abstützen.

6. Horizontalquersiegeleinheit zumindest nach Anspruch 2, **dadurch gekennzeichnet, dass** zumindest eine Siegelwelle (40bd, 42bd, 44bd, 46bd) eines Siegelbackenpaars (22bd, 24bd) zumindest einen Stützbereich (54bd, 56bd, 58bd, 60bd) aufweist, an dem sich zumindest eine Siegelbacke (26bd, 28bd, 30bd, 32bd) eines weiteren Siegelbackenpaars (22bd, 24bd) mit gemeinsamer Rotationsachse (18bd, 20bd) abstützt.

7. Horizontalquersiegeleinheit nach einem der vorhergehenden Ansprüche, **dadurch gekennzeichnet, dass** die Stützeinheit (62a, 64a) zumindest zwei ineinander greifende Stützkämme (72a, 74a, 76a, 78a) aufweist, die an den benachbarten Siegelbacken (28a, 32a) befestigt sind.

8. Horizontalquersiegeleinheit nach einem der vorhergehenden Ansprüche, **gekennzeichnet durch** zumindest ein Ausgleichsgewicht (80abd, 82 abd, 84 abd, 86 abd), das Zentrifugalkräfte einer an einer Siegelwelle (40 abd, 42 abd, 44 abd, 46 abd) angeordneten Siegelbacke (26 abd, 28 abd, 30 abd, 32 abd) zumindest teilweise ausgleicht.

9. Horizontale Schlauchbeutelmaschine mit einer Horizontalquersiegeleinheit (10a-d) nach einem der vorhergehenden Ansprüche.

## Claims

1. Horizontal transverse sealing unit, in particular for a horizontal tubular bag forming and filling machine (12a-d), for closing at least one tubular film (14a-d) and at least one item (16a-d) to be packed, having a first and a second rotation axis (18a-d, 20a-d) which are mutually parallel, and at least two sealing jaw pairs (22a-d, 24a-d, 118c, 120c) which are in each case formed by at least one sealing jaw (26a-d, 30a-d, 122c, 126c) that rotates about the first rotation axis (18a-d) and by at least one sealing jaw (28a-d, 32a-d, 124c, 128c) that rotates about the second rotation axis (20a-d), such that in a sealing procedure the sealing jaws (26a-d, 28a-d, 30a-d, 32a-d, 122c, 124c, 126c, 128c) of one sealing jaw pair (22a-d, 24a-d, 118c, 120c) converge and material layers (34a-d) between the sealing jaws (26a-d, 28a-d, 30a-d, 32a-d, 122c, 124c, 126c, 128c) are sealable under the exertion of pressure, **characterized by** at least two independently driveable sealing drives (36a-d, 38a-d) which are provided for driving at least two sealing jaw pairs (22a-d, 24a-d, 118c, 120c) in a mutually independent manner, and by at least one support unit (62a, 64a, 62c, 64c) which is provided for at least partially bridging a gap (66a, 68a) between sealing jaws (28a, 32a, 28c, 32c) that are adjacent in a rotation direction (70a, 70c) and have a common rotation axis (20a, 20c).

2. Horizontal transverse sealing unit according to Claim 1, **characterized in that** the sealing drives (36a-d, 38a-d) each have one sealing shaft (40a-d, 42a-d, 44a-d, 46a-d) that rotates about the first rotation axis (18a-d) and one that rotates about the second rotation axis (20a-d), at least one sealing jaw (26a-d, 28a-d, 30a-d, 32a-d, 122c, 124c, 126c, 128c) of at least one sealing jaw pair (22a-d, 24a-d, 118c, 120c) being disposed on each of said sealing shafts (40a-d, 42a-d, 44a-d, 46a-d).

3. Horizontal transverse sealing unit according to Claim 1 or Claim 2, **characterized by** a control unit (48a-d) which is provided for optimizing a movement profile of the sealing drives (36a-d, 38a-d).

4. Horizontal transverse sealing unit according to one of the preceding claims, **characterized in that** two sealing drives (36a-d, 38a-d) in the direction of the common rotation axes (18a-d, 20a-d) are disposed so as to be mutually opposite.

5. Horizontal transverse sealing unit according to at least Claim 2, **characterized by** at least one support shaft (50a, 52a) by way of which sealing shafts (40a, 42a, 44a, 46a) having a common rotation axis (18a, 20a) are mutually supported.

6. Horizontal transverse sealing unit according to at least Claim 2, **characterized in that** at least one sealing shaft (40bd, 42bd, 44bd, 46bd) of one sealing jaw pair (22bd, 24bd) has at least one support region (54bd, 56bd, 58bd, 60bd) on which at least one sealing jaw (26bd, 28bd, 30bd, 32bd) of one further sealing jaw pair (22bd, 24bd) having a common rotation axis (18bd, 20bd) is supported.

7. Horizontal transverse sealing unit according to one of the preceding claims, **characterized in that** the support unit (62a, 64a) has at least two mutually meshing support combs (72a, 74a, 76a, 78a) which are fastened to the neighbouring sealing jaws (28a, 32a).

8. Horizontal transverse sealing unit according to one of the preceding claims, **characterized by** at least one balancing weight (80abd, 82abd, 84abd, 86abd) which at least partially equalizes centrifugal forces of a sealing jaw (26abd, 28abd, 30abd, 32abd) that is disposed on a sealing shaft (40abd, 42abd, 44abd, 46abd).

9. Horizontal tubular bag forming and filling machine having a horizontal transverse stealing unit (10a-d) according to one of the preceding claims.

## Revendications

1. Unité de scellement transversal horizontale, en particulier pour une ensacheuse tubulaire horizontale (12a-d) pour la fermeture d'au moins un film tubulaire (14a-d) autour d'au moins un objet à emballer (16a-d), comprenant un premier et un deuxième axe de rotation parallèle l'un à l'autre (18a-d, 20a-d), et au moins deux paires de mâchoires de scellement (22a-d, 24a-d, 118c, 120c) qui sont formées à chaque fois par au moins une mâchoire de scellement (26a-d, 30a-d, 122c, 126c) tournant autour du premier axe de rotation (18a-d) et au moins une mâchoire de scellement (28a-d, 32a-d, 124c, 128c) tournant autour du deuxième axe de rotation (20a-d) de telle sorte que lors d'une opération de scellement, les mâchoires de scellement (26a-d, 28a-d, 30a-d, 32a-d, 122c, 124c, 126c, 128c) d'une paire de mâchoires de scellement (22a-d, 24a-d, 118c, 120c) se rapprochent et que des couches de matériau (34a-d) puissent être scellées par application de pression entre les mâchoires de scellement (26a-d, 28a-d, 30a-d, 32a-d, 122c, 124c, 126c, 128c), **caractérisée par** au moins deux entraînements de scellement (36a-d, 38a-d) pouvant être entraînés indépendamment, qui sont prévus pour entraîner indépendamment l'une de l'autre au moins deux paires de mâchoires de scellement (22a-d, 24a-d, 118c, 120c), et par au moins une unité de support (62a, 64a, 62c, 64c) qui est prévue pour surmonter au moins en partie une fente (66a, 68a) entre des mâchoires de scellement (28a, 32a, 28c, 32c) de même axe de rotation (20a, 20c) adjacentes dans une direction de rotation (70a, 70c).

2. Unité de scellement transversal horizontale selon la revendication 1, **caractérisée en ce que** les entraînements de scellement (36a-d, 38a-d) présentent chacun un arbre de scellement (40a-d, 42a-d, 44a-d, 46a-d) tournant respectivement autour du premier axe de rotation (18a-d) et autour du deuxième axe de rotation (20a-d), au niveau desquels est à chaque fois disposée au moins une mâchoire de scellement (26a-d, 28a-d, 30a-d, 32a-d, 122c, 124c, 126c, 128c) d'au moins une paire de mâchoires de scellement (22a-d, 24ad, 118c, 120c).

3. Unité de scellement transversal horizontale selon la revendication 1 ou la revendication 2, **caractérisée par** une unité de commande (48a-d) qui est prévue pour optimiser un profil de déplacement des entraînements de scellement (36a-d, 38a-d).

4. Unité de scellement transversal horizontale selon l'une quelconque des revendications précédentes, **caractérisée en ce que** deux entraînements de scellement (36a-d, 38a-d) sont disposés à l'opposé l'un de l'autre dans la direction des axes de rotation communs (18a-d, 20a-d).

5. Unité de scellement transversal horizontale selon au moins la revendication 2, **caractérisée par** au moins un arbre de support (50a, 52a) avec lequel des arbres de scellement (40, 42a, 44a, 46) avec un axe de rotation commun (18a, 20a) se supportent mutuellement.

6. Unité de scellement transversal horizontale selon au moins la revendication 2, **caractérisée en ce qu'**au moins un arbre de scellement (40bd, 42bd, 44bd, 46bd) d'une paire de mâchoires de scellement (22bd, 24bd) présente au moins une région de support (54bd, 56bd, 58bd, 60bd) contre laquelle s'appuie au moins une mâchoire de scellement (26bd, 28bd, 30bd, 32bd) d'une paire de mâchoires de scellement supplémentaire (22bd, 24bd) avec un axe de rotation commun (18bd, 20bd).

7. Unité de scellement transversal horizontale selon l'une quelconque des revendications précédentes, **caractérisée en ce que** l'unité de support (62a, 64a) présente au moins deux peignes de support s'engageant l'un dans l'autre (72a, 74a, 76a, 78a) qui sont fixés aux mâchoires de scellement adjacentes (28a, 32a).

8. Unité de scellement transversal horizontale selon l'une quelconque des revendications précédentes, **caractérisée par** au moins un poids d'équilibrage (80abd, 82abd, 84abd, 86abd) qui équilibre au moins en partie les forces centrifuges d'une mâchoire de scellement (26abd, 28abd, 30abd, 32abd) disposée sur un arbre de scellement (40abd, 42abd, 44abd, 46abd).

9. Ensacheuse tubulaire horizontale comprenant une unité de scellement transversal horizontale (10ad) selon l'une quelconque des revendications précédentes.
